# EUROPÄISCHE PATENTANMELDUNG

(11) **EP 4 524 475 A1**
(43) Veröffentlichungstag der Anmeldung: **19.03.2025**
(21) Anmeldenummer: 23197899.0
(22) Anmeldetag: 18.09.2023
(51) Int. Cl.: F24C 3/00, F24C 3/08, F24C 7/06, F24C 15/08, F24C 15/10, A47B 77/08

(54) **MODULARER RAHMEN FÜR EINE OUTDOOR-KÜCHE**

(71) Anmelder: Burnhard GmbH, 40589 Düsseldorf (DE)
(72) Erfinder: RUHFUS, Max, 40589 Düsseldorf (DE)
(74) Vertreter: dompatent von Kreisler Selting Werner - Partnerschaft von Patent- und Rechtsanwälten mbB

(57) **Zusammenfassung**

Modularer Rahmen für eine Outdoor-Küche zur austauschbaren Aufnahme mindestens eines Funktionsmoduls umfassend:
- einen Rahmenkörper mit einem ersten Seitenteil und einem dem ersten Seitenteil gegenüberliegenden zweiten Seitenteil, einem Vorderseitenteil und einem dem Vorderseitenteil gegenüberliegenden Rückseitenteil zur Umgrenzung eines Rahmeninnenraums,
- einer ersten Aufnahmeeinrichtung und
- mindestens einer Medienverteileinrichtung;

wobei die mindestens eine Medienverteileinrichtung mindestens zwei Konnektoren und eine Leitungseinrichtung umfasst;
wobei die Leitungseinrichtung zur Verteilung mindestens eines Mediums zwischen den mindestens zwei Konnektoren ausgebildet ist;
wobei ein erster der Konnektoren in einem Bereich des ersten Seitenteils angeordnet ist und ein zweiter der Konnektoren zur Anbindung an das mindestens eine Funktionsmodul ausgebildet ist; und
wobei über die erste Aufnahmeeinrichtung das mindestens eine Funktionsmodul mit dem Rahmenkörper verbindbar und/oder an dem Rahmenkörper lagerbar ist.

## Beschreibung

Die vorliegende Erfindung betrifft einen modularen Rahmen für eine Outdoor-Küche zur austauschbaren Aufnahme mindestens eines Funktionsmoduls.

Aus dem Stand der Technik ist eine Vielzahl von Rahmenmodulen für eine Outdoor-Küche umfassend mindestens eines Funktionsmoduls bekannt. Die Outdoor-Küchen können insbesondere auch einen Grill umfassen.

Es ist bereits bekannt, den Grillbereich einer Outdoor-Küche multifunktional auszugestalten. So kann beispielsweise ein Grill über mehrere Grillbereiche verfügen und in mehrere funktionale Teilbereiche unterteilt werden. Der Grillbereich kann dann beispielweise einen Grillrost, einen Bratbereich und einen Planchabereich aufweisen, wodurch der Grill aus dem Stand der Technik mehrere Funktionen erfüllen kann.

Zur Erweiterung des Funktionsumfangs des vorbezeichneten Grills bzw. generell einer Outdoorküche werden meist seitlich an den Grillbereich und/oder Hauptkochbereich einer Outdoorküche die vorbezeichneten Rahmenmodule umfassend mindestens ein Funktionsmodul angeordnet, um eben die Outdoorküche um weitere Funktion zu erweitern.

Innerhalb des Rahmenmoduls, welches aus dem Stand der Technik bekannt ist, sind in der Regel unterschiedliche Funktionsmodule, wie beispielsweise Gaskocher, Keramikbrenner, Kochplatten etc., angeordnet. Gemäß dem bekannten Stand der Technik sind dabei das Rahmenmodul und das Funktionsmodul miteinander dauerhaft verbunden, wie beispielsweise verschraubt oder sogar stoffschlüssig verbunden, so dass eine Trennung des Funktionsmoduls und Rahmenmoduls nur mit erheblichem Aufwand oder gar nicht möglich ist.

Die bekannten Rahmenmodule weisen zudem das Problem auf, dass diese über einen spezifisch an das jeweilige Funktionsmodul angepassten Rahmen oder konstruktive Gegebenheiten verfügen, die ein Austauschen des Funktionsmoduls nicht ohne Weiteres ermöglichen. Insbesondere sind die Zu- und Ableitungen an das jeweilige Funktionsmodul spezifisch adaptiert. Der Benutzer, der einen Grill bzw. eine Outdoorküche mit unterschiedlichen Funktionsmodulen nutzen möchte, benötigt somit entsprechend viel Platz, um die sämtlichen gewünschten Rahmenmodule umfassend jeweils ein spezifisches Funktionsmodul in der Outdoorküche anzuordnen bzw. auch zu lagern. Zudem ist die Produktion derartiger spezifisch auf das jeweilige umfasste Funktionsmodul angepasste Rahmenmodul material- und kostenaufwändig.

Ausgehend von den beschriebenen Nachteilen der aus dem Stand der Technik bekannten Rahmen bzw. Rahmenmodule von Outdoor-Küchen oder Grills ist es daher die Aufgabe der vorliegenden Erfindung, einen modularen Rahmen für eine Outdoor-Küche zur austauschbaren Aufnahme mindestens eines Funktionsmoduls bereitzustellen.

Gemäß einem ersten Aspekt betrifft die vorliegende Erfindung einen modularen Rahmen zur austauschbaren Aufnahme mindestens eines Funktionsmoduls.

Der erfindungsgemäße modulare Rahmen für eine Outdoor-Küche zur austauschbaren Aufnahme mindestens eines Funktionsmoduls umfasst:
- einen Rahmenkörper mit einem ersten Seitenteil und einem dem ersten Seitenteil gegenüberliegenden zweiten Seitenteil, einem Vorderseitenteil und einem dem Vorderseitenteil gegenüberliegenden Rückseitenteil zur Umgrenzung eines Rahmeninnenraums, einer ersten Aufnahmeeinrichtung und mindestens einer Medienverteileinrichtung; wobei die mindestens eine Medienverteileinrichtung mindestens zwei Konnektoren und eine Leitungseinrichtung umfasst; wobei die Leitungseinrichtung zur Verteilung mindestens eines Mediums zwischen den mindestens zwei Konnektoren ausgebildet ist; wobei ein erster Konnektor der beiden Konnektoren in einem Bereich des ersten Seitenteils angeordnet ist und ein zweiter Konnektor der beiden Konnektoren zur Anbindung an das mindestens eine Funktionsmodul ausgebildet ist; und wobei über die erste Aufnahmeeinrichtung das mindestens eine Funktionsmodul mit dem Rahmenkörper verbindbar und/oder an dem Rahmenkörper lagerbar ist.

Im Innenraum des erfindungsgemäßen modularen Rahmens können unterschiedliche Funktionsmodule aufgenommen, gelagert und bei Bedarf ausgetauscht werden. Der Benutzer des modularen Rahmens kann somit je nach Bedarf ein gewünschtes Funktionsmodul auswählen und dieses innerhalb des einheitlichen modularen Rahmens verwenden, so dass die Outdoor-Küche oder der Grill, der den erfindungsgemäßen modularen Rahmen umfasst, in vorteilhafter Weise platzsparend ausgestaltet werden kann.

Gleichzeitig bietet der modulare Rahmen dem Benutzer ein hohes Maß an Flexibilität, da je nach Verwendungszweck das gewünschte spezifische Funktionsmodul verwendet werden kann, so dass der Benutzer für eine alternative Verwendung lediglich das gewünschte Funktionsmodul und nicht einen kompletten Grill, eine komplette Outdoor-Küche oder ein separates, spezifisch auf ein Funktionsmodul angepasstes, Rahmenmodul erwerben muss.

Somit wird durch den modularen Rahmen auch einer kosten- und ressourcenintensiven Produktion von Outdoor-Küchen und von Grills entgegengewirkt, da der Benutzer lediglich einen modularen Rahmen zur austauschbaren Aufnahme eines Funktionsmoduls benötigt und somit eine Vielzahl unterschiedlich ausgestalteter Funktionsmodule mit dem modularen Rahmen verwenden kann. Dem Kauf beispielsweise mehrerer Grills in unterschiedlichen Größen oder dem Zukauf aufwändiger Zusatzmodule kann somit in vorteilhafter Weise entgegengewirkt werden.

Darüber hinaus wird die Wartung des Grills, der den erfindungsgemäßen Rahmen verwendet, erleichtert, da im Falle eines defekten Funktionsmoduls eines Grills nicht der gesamte Grill einer Wartung zugeführt werden muss, sondern lediglich das defekte Funktionsmodul.

Ein weiterer Vorteil des erfindungsgemäßen modularen Rahmens ist, dass das jeweilige Funktionsmodul werkzeuglos mit dem Rahmen verbunden und auch wieder getrennt werden kann, wobei eine Medienversorgung durch die vorgesehene Medienverteileinrichtung und insbesondere über den zweiten Konnektor realisiert wird.

Im Rahmen der Erfindung kann unter dem Funktionsmodul beispielsweise ein Keramikbrennermodul, ein Kochmodul, wie insbesondere ein gasbetriebenes und elektrisch betriebenes Kochfeld, ein Pizza-Ofen, ein Wok-Brenner, ein Plancha-Grill oder ein Adapter zur Aufnahme eines Edelstahlbehälters verstanden werden. Das Keramikbrennermodul umfasst dabei mindestens einen Keramikbrenner, der unterhalb eines Grillrostes angeordnet ist. Der Brenner kann dabei auch als ein Infrarotbrenner ausgestaltet sein.

Das Kochmodul verfügt über einen Kochbereich, der über einen Brenner oder ein Heizmodul erhitzt werden kann. Alternativ kann das Kochmodul auch mehrere Kochbereiche aufweisen, die über einen oder über mehrere Brenner erhitzt werden. Weiterhin alternativ kann auch ein Induktionskochfeld für das Kochmodul vorgesehen werden. Die Energiezufuhr der entsprechenden Koch- und/oder Funktionsmodule erfolgt jeweils über die Medienverteileinrichtung und über den zweiten Konnektor der Medienverteileinrichtung.

Das als Pizza-Ofen ausgestaltete Funktionsmodul weist einen verschließbaren Ofenraum auf, der über mindestens einen Brenner erhitzt werden kann.

Der Wok-Brenner stellt eine geometrische Anordnung mindestens eines Brenners dar, der besonders vorteilhaft zur Verwendung, Lagerung und Erhitzung eines Woks geeignet ist. Der Wok-Brenner kann dabei eine konkave Vertiefung zur Lagerung und Wärmeübertragung an den Wok aufweisen.

Ferner stellt der Plancha-Grill eine Grillebene bereit, die einen seitlich umlaufenden Rand aufweist.

Der Edelstahlbehälter kann beispielsweise als ein Behälter zur Lagerung von Grillgut oder zur Aufnahme von Frischwasser ausgestaltet werden.

Es existieren somit unterschiedliche Funktionsmodule für verschiedene Funktionen, die über den modularen Rahmen in vorteilhafter Weise ausgetauscht und anschließend verwendet werden können.

Der Rahmenkörper, den der modulare Rahmen aufweist, begrenzt durch das erste und zweite Seitenteil sowie durch das Vorderseitenteil und das Rückseitenteil einen Rahmeninnenraum. Der Rahmeninnenraum ist zur Anordnung und Aufnahme der Funktionsmodule ausgestaltet. Dabei kann das Funktionsmodul innerhalb des Rahmeninnenraums in einem oberen, einem mittleren oder einem unteren Bereich angeordnet sein. Der Rahmenkörper besteht dabei bevorzugt aus einem metallischen Material.

Die Ausgestaltung des erfindungsgemäßen Rahmenkörpers kann dabei eine rechteckige Geometrie aufweisen. Das erste und zweite Seitenteil kann dabei bevorzugt parallel zueinander angeordnet werden. Das Vorderseitenteil und das Rückseitenteil können ebenfalls zueinander parallel verlaufend ausgebildet werden.

An dem Rahmenkörper kann dabei auch eine Halterung für eine Rotisserie angeordnet oder ausgebildet sein, wobei die Halterung beispielsweise derartig ausgestaltet sein kann, dass die Rotisserie-Halterung gegenüber dem Rahmenkörper verschiebbar gelagert ist.

Ferner kann der Rahmenkörper aus einem tafelförmigen Material gefertigt sein und bevorzugt Materialstärken zwischen 0,5 mm und 3,0 mm, besonders bevorzugt zwischen 1,0 und 2,0 mm, aufweisen. Derartige Materialstärken des Rahmenkörpers haben sich als besonders stabil und vorteilhaft geeignet für die vorliegende Erfindung herausgestellt.

Optional ist vorgesehen, dass das erste Seitenteil, das zweite Seitenteil, das Vorderseitenteil und/oder das Rückseitenteil des Rahmenkörpers aus einer Metalllegierung bestehen. Dabei können die jeweiligen Seitenteile auch aus unterschiedlichen Legierungen bestehen. Eine derartige Legierung kann beispielsweise ein rostfreier Edelstahl sein. Durch die derartige Ausgestaltung der jeweiligen Seitenteile ist der modulare Rahmen besonders stabil und widersteht in vorteilhafter Weise hohen Temperaturen und witterungsbedingten Einflüssen.

Der Rahmenkörper kann auch als ein umlaufendes Rahmenteil ausgestaltet sein. In einer derartigen Ausgestaltung kann der Rahmenkörper eine ellipsenförmige oder kreisförmige Geometrie aufweisen, bei der die Übergänge vom beispielsweise ersten Seitenteil zum Vorderseitenteil fließend sind. Der Rahmenkörper kann aber auch lediglich im Bereich von spezifischen Einzelteilen eine bogenförmige Verlaufsform aufweisen. Die vorbezeichneten Ausgestaltungsformen weisen den Vorteil auf, dass die entsprechend ausgestalteten modularen Rahmen auch an runde Teile einer Outdoor-Küche, wie beispielsweise einem Kugelgrill oder Kamado-Grill, angepasst und an diesen befestigt werden können.

Über die erste Aufnahmeeinrichtung des modularen Rahmens ist das mindestens eine Funktionsmodul mit dem Rahmenkörper verbindbar und/oder an dem Rahmenkörper lagerbar. Die erste Aufnahmeeinrichtung kann dabei als ein Vorsprung des Rahmenkörpers oder eine zusätzliche Konstruktion ausgestaltet sein. Beispielsweise kann die Aufnahmeeinrichtung als ein innerhalb des Rahmens umlaufendes Blech mit einer in Richtung des Rahmeninnenraums gerichteten Kante ausgestaltet sein. Auch kann es vorgesehen werden, die Aufnahmeeinrichtung durch ein Umfalten von Kantenbereichen zumindest anteilig von Einzelteilen des Rahmenkörpers auszugestalten. Die umgefalteten Kantenbereiche können dann als eine Auflagefläche für das Funktionsmodul dienen.

Ferner weist der modulare Rahmen mindestens eine Medienverteileinrichtung auf, die mindestens zwei Konnektoren und eine Leitungseinrichtung umfasst.

Der Konnektor kann insbesondere zwei aneinander angepasste Konnektorenteile umfassen, welche zur Etablierung einer mediendichten Verbindung miteinander verbindbar und besonders bevorzugt gegeneinander verriegelbar sind. Erfindungsgemäß kann die Verbindung und Trennung der beiden Konnektorenteile werkzeuglos erfolgen, beispielsweise in Form einer federbelasteten Schnellkupplung.

Ein Konnektor kann im Rahmen der Erfindung beispielsweise ein Stecker, ein Adapter, eine Verbindungseinrichtung, eine Kupplung, ein Anschluss oder ein Ventil sein. Auch ein Schlauchverbinder oder ein Steckerverbinder wird im Rahmen der Erfindung als ein Konnektor verstanden. Über einen Konnektor können Leitungseinrichtungen miteinander verbunden werden.

Die Leitungseinrichtung kann beispielsweise als ein Schlauch für ein Medium wie ein Fluid, wie insbesondere ein Gas oder Wasser, und zur Verteilung des mindestens einen Mediums zwischen den mindestens zwei Konnektoren ausgestaltet sein. Ferner kann die Leitungseinrichtung auch als ein Draht, durch den elektrischer Strom bzw. elektrische Signale als Medium geleitet wird, ausgestaltet sein. Die Leitungseinrichtung kann derartig ausgebildet sein, dass diese mehrere Medien leitet, beispielsweise ein Gas durch einen Schlauch und parallel dazu einen elektrischen Strom durch einen Draht, der beispielsweise außerhalb des Schlauchs angeordnet ist. Die Leitungseinrichtung kann dazu beispielsweise ein medienführendes Hauptlumen und optional mindestens ein Nebenlumen umfassen, wodurch beispielsweise elektrisch leitfähige Leitungen verlegt sind.

Der Strom kann dabei in einem Niederspannungs- oder eine Mittelspannungsbereich bereitgestellt werden, wobei der Strom zu einem elektrisch betriebenen Funktionsmodul geleitet werden kann.

Über den Konnektor können ferner mehrere Leitungseinrichtungen miteinander verbunden werden, ohne dass ein Verlust des Mediums in dem Bereich des Konnektors auftritt. Mit anderen Worten: Der Konnektor ist ebenso wie die Leitungseinrichtung mediendicht ausgestaltet.

Selbstverständlich kann der Konnektor, ähnlich wie die Leitungseinrichtung, derartig ausgestaltet sein, dass dieser beispielsweise Leitungseinrichtungen verbindet, die ein Medium beinhalten und zusätzlich elektrischen Strom bzw. elektrische Signale leitende Leitungseinrichtungen miteinander verbindet.

Im Rahmen der Erfindung wird neben elektrischem Strom oder Gas auch Wasser oder Grauwasser, elektrische Signale und sonstige Fluide als Medium verstanden.

Der modulare Rahmen weist einen ersten Konnektor in einem Bereich des ersten Seitenteils und einen zweiten Konnektor zur Anbindung an das mindestens eine Funktionsmodul auf. Somit kann das Medium von dem ersten Seitenteil durch die Leitungseinrichtung zum Funktionsmodul geleitet werden. Alternativ kann der erste Konnektor auch an dem zweiten Seitenteil, an dem Vorderseitenteil oder an dem Rückseitenteil angeordnet sein.

Der erfindungsgemäße modulare Rahmen ermöglicht in vorteilhafter Weise, dass das Medium von dem Rahmenkörper zu dem Funktionsmodul geleitet wird.

Die erste Aufnahmeeinrichtung, über die das mindestens eine Funktionsmodul mit dem Rahmenkörper verbindbar und/oder an dem Rahmenkörper lagerbar ist, ist dabei bevorzugt in einem oberen Randbereich des Rahmenkörpers ausgebildet, um im oberen Rahmenbereich das Funktionsmodul zu lagern bzw. dort mit dem Rahmen verbunden zu werden. Ferner ermöglicht der modulare Rahmen auf besonders einfache Art und Weise neben dem Anordnen auch ein Austauschen eines Funktionsmodules durch ein anderes Funktionsmodul. Da das Funktionsmodul über die erste Aufnahmeeinrichtung mit dem Rahmenkörper und somit in den modularen Rahmen integrierbar ist, wird durch den einfachen und modularen Aufbau des modularen Rahmens ein besonders einfacher Funktionsmodulwechsel ermöglicht, wobei dieser bevorzugt werkzeuglos und ohne größeren Aufwand für den Benutzer durchführbar ist.

Vorzugsweise ist vorgesehen, dass die Leitungseinrichtung der Medienverteileinrichtung an der Vorderseite des Rahmenkörpers angeordnet ist. Dabei kann die Leitungseinrichtung beispielsweise parallel zur Vorderseite und parallel zu einer Mittelebene des Funktionsmoduls verlaufen, wobei die Mittelebene des Funktionsmoduls parallel zu dem Boden angeordnet ist. Bei einer derartigen Anordnung der Leitungseinrichtung kann der erste Konnektor an dem ersten oder dem zweiten Seitenteil des Rahmenkörpers angeordnet sein. Die Leitungseinrichtung kann dabei beispielsweise über Halterungseinrichtungen, wie etwa eine Klippeinrichtung, an dem Rahmenkörper angeordnet sein. Durch die Anordnung der Leitungseinrichtung an der Vorderseite des Rahmenkörpers ist die Medienverteileinrichtung dem Benutzer besonders vorteilhaft zugänglich.

Optional kann vorgesehen sein, dass der Rahmenkörper eine an das Funktionsmodul angepasste Geometrie aufweist. Beispielsweise kann ein als ein Edelstahlbehälter ausgestaltetes Funktionsmodul eine dahingehend angepasste Geometrie aufweisen, dass der Edelstahlbehälter innerhalb des Rahmenkörper eingehängt werden kann. Das Funktionsmodul füllt das Innere des Rahmenkörpers somit auf besonders ästhetische und in leicht zu reinigender Weise aus, wobei der Raum, den der Rahmenkörper bereitstellt, effizient genutzt wird.

In einer bevorzugten Ausführungsform sind die Konnektoren jeweils dazu ausgebildet, mit einem angepassten Konnektor oder einer Anschlusseinrichtung verbunden zu werden. Dabei kann der Konnektor beispielsweise als ein männlicher Konnektor mit einem Einsteckteil ausgestaltet sein, so dass dieser mit dem angepassten Konnektor, einem weiblich ausgestalteten Konnektor, verbindbar ist. Selbstverständlich kann der Konnektor auch als ein weiblicher Konnektor und der angepasste Konnektor als ein männlicher Konnektor ausgestaltet sein. Alternativ dazu kann der Konnektor auch als Muffe ausgestaltet sein. Der Konnektor und der angepasste Konnektor sind jeweils aneinander angepasste Konnektoren, wobei der angepasste Konnektor gegenüber dem Konnektor angeordnet ist. Der Konnektor und der angepasste Konnektor sind dabei mediendicht miteinander verbunden und lassen sich bevorzugt werkzeuglos verbinden und trennen. Alternativ kann der Konnektor auch mit einer Anschlusseinrichtung verbunden werden, wobei die Anschlusseinrichtung beispielsweise ein Gasflaschenventil oder ein Gas- oder Wasseranschluss eines Hauses sein kann.

Durch die derartige Ausgestaltung der Konnektoren können diese auf besonders einfache Weise mit angepassten Konnektoren oder einer Anschlusseinrichtung verbunden werden, so dass die Konnektoren und damit die Medienverteileinrichtung besonders einfach in ein bestehendes Mediensystem integriert werden kann oder so dass die Medienverteileinrichtung besonders einfach erweitert werden kann.

Der Konnektor kann insbesondere als Schnellkupplung ausgeführt werden, wobei an der Leitungseinrichtung ein erstes Schnellverbindungsteil mediendicht angebunden ist und ein an das erste Schnellverbindungsteil adaptiertes zweites Schnellverbindungsteil beispielsweise an dem Funktionsmodul ausgebildet werden kann zur Anbindung des zweiten Schnellverbindungsteils an das erste Schnellverbindungsteil. Beispielsweise kann der Konnektor als eine Einstecckupplung umfassend ein Einsteckteil und ein gegenüberliegendes Muffenteil ausgebildet werden.

Der Konnektor kann bevorzugt eine federbelastete Verriegelungseinrichtung umfassen, welche bei dem Etablieren der Verbindung der beiden Konnektoren teile einrastet zum Verriegeln der beiden Konnektorenteile und wobei bei Bewegung der Verriegelungseinrichtung gegen die Federkraft die beiden Konnektorenteile wieder freigegeben und die Verbindung wieder getrennt werden kann.

Vorzugsweise umfasst die Medienverteileinrichtung eine Medienregeleinrichtung zur Regelung des mindestens einen Medienstroms in der Leitungseinrichtung zwischen dem ersten Konnektor und dem zweiten Konnektor. Die Medienregeleinrichtung kann dabei entweder direkt in der Leitungseinrichtung integriert sein oder beispielsweise durch ein Drosselventil. Durch die Medienregeleinrichtung wird der Fluss des Mediums reguliert, wobei der Fluss eines Medienstroms bis auf 0 geregelt werden kann und wobei auch das Ein- und Ausschalten durch die Medienverteileinrichtung über die Medienregeleinrichtung ermöglicht wird. Ferner kann die Medienregeleinrichtung beispielsweise auch als ein einstellbarer Druckminderer ausgestaltet sein. Durch die Medienregeleinrichtung wird der Medienstrom bzw. das Medium besonders vorteilhaft geregelt, so dass der Benutzer besonders vorteilhaft Einfluss auf das Strömungsverhalten des Mediums nehmen kann.

In einer bevorzugten Ausführungsform umfasst der Rahmenkörper eine zweite Aufnahmeeinrichtung, über die mindestens ein Schrankmodul mit dem Rahmenkörper verbindbar ist. Die zweite Aufnahmeeinrichtung kann dabei bevorzugt in einem unteren Randbereich des Rahmenkörpers angeordnet werden und kann beispielsweise durch einen Vorsprung, einen Einsatz oder eine sonstige konstruktive Maßnahme ausgestaltet sein. Beispielsweise kann über die zweite Aufnahmeeinrichtung das Schrankmodul unterhalb des Rahmenkörpers angeordnet werden, wobei das Schrankmodul Rollen, Türen, Schubladen, Wände, etc. aufweisen kann. Ferner kann das Schrankmodul zur Lagerung einer Medienquelle bzw. einer Medienspeichereinheit, beispielweise einer Gasflasche oder eines Akkus, verwendet werden, welche besonders bevorzugt an die Medienverteileinrichtung anbindbar ausgestaltet sind. Durch die zweite Aufnahmeeinrichtung kann der modulare Rahmen somit auf einfache Weise um mindestens ein Schrankmodul ergänzt werden.

Vorzugsweise weist der Rahmenkörper an dem ersten Seitenteil, dem zweiten Seitenteil, der Vorderseite und/oder der Rückseite einen Anschlag auf zur Bildung der ersten und/oder zweiten Aufnahmeeinrichtung, über welche das entsprechende Funktionsmodul und/oder Schrankmodul an dem Rahmenkörper arretierbar ist. Der Anschlag kann dabei entweder direkt am Rahmenkörper oder über ein zusätzliches Bauteil am Rahmenkörper ausgestaltet sein. Der Anschlag kann auch durch ein teilweises Umfalten oder Abkanten eines tafelförmigen Bereiches des jeweiligen Teils des Rahmenkörpers ausgebildet werden. Dabei kann der Anschlag entweder am gesamten Rahmenkörper oder nur an Teilen des Rahmenkörpers angeordnet sein bzw. ausgebildet werden, beispielsweise an gegenüberliegenden Seiten des Rahmenkörpers. Durch den Anschlag wird das Funktionsmodul und/oder das Schrankmodul in vorteilhafter Weise besonders stabil an den Rahmenkörper angeordnet und arretiert, so dass das Funktionsmodul und/oder das Schrankmodul möglichst spielfrei und fest mit dem Rahmenkörper verbindbar ist. Durch die Ausbildung des mindestens einen Anschlags wird weiterhin die Steifigkeit, insbesondere die Biegesteifigkeit, des Rahmenkörpers erhöht.

In einer bevorzugten Ausführungsform ist die Medienverteileinrichtung L-förmig ausgestaltet, wobei der erste Konnektor über die Leitungseinrichtung und über den zweiten Konnektor mit dem Funktionsmodul verbindbar ist. Bei einer derartigen Ausgestaltung kann der zweite Konnektor oberhalb des ersten Konnektors angeordnet sein, wobei das Funktionsmodul ebenfalls oberhalb des zweiten Konnektors verbindbar ist. Die zwischen dem ersten und dem zweiten Konnektor angeordnete Leitungseinrichtung kann dabei gradlinig ausgestaltet sein, so dass das Medium möglichst widerstandsfrei durch die Leitungseinrichtung strömen kann. Durch die L-förmige Ausgestaltung der Medienverteileinrichtung kann somit ein Medium besonders vorteilhaft durch die Leitungseinrichtung strömen. Ferner stellt die L-förmige Medienverteileinrichtung ein optisch ästhetisches Erscheinungsbild dar.

Vorzugsweise weist die Medienverteileinrichtung in einem Bereich des zweiten Seitenteils mindestens einen dritten Konnektor auf. Dabei strömt das Medium zunächst von dem ersten Konnektor, der am ersten Seitenteil angeordnet ist, ausgehend über die Leitungseinrichtung und dem zweiten Konnektor zu dem Funktionsmodul, wobei ein weiterer Teil des Mediums weiter durch die Leitungseinrichtung zu dem dritten Konnektor strömt. Die Leitungseinrichtung kann dabei auch einen Verteiler aufweisen, über den das Medium vom ersten Konnektor ausgehend zu dem zweiten und dem dritten Konnektor geleitet wird.

Durch den dritten Konnektor wird der Medienstrom der Medienverteileinrichtung erweitert, so dass ein Anteil des Medienstroms über das Funktionsmodul hinausgehend verwendbar ist. Durch die Anordnung des dritten Konnektors an dem zweiten Seitenteil strömt das Medium somit von dem ersten Seitenteil über das Funktionsmodul in Richtung des zweiten Seitenteils. Durch den dritten Konnektor wird die Medienverteileinrichtung in vorteilhafter Weise erweitert, so dass dem Benutzer mindestens eine weitere Anschlussmöglichkeit zur Verfügung steht. Über den dritten Konnektor kann beispielsweise wiederum ein erster Konnektor eines weiteren Funktionsmoduls angebunden werden.

In einer bevorzugten Ausführungsform weist die Medienverteileinrichtung einen vierten Konnektor zum Anschluss mindestens einer Medienquelle auf. Durch den vierten Konnektor wird an der Medienverteileinrichtung eine weitere Anschlussmöglichkeit geschaffen, so dass eine Medienquelle an die Medienverteileinrichtung anbindbar ist. Es kann jedoch auch vorgesehen sein, dass die Medienquelle an dem ersten, dem zweiten, oder dem dritten Konnektor angeschlossen wird. Durch den vierten Konnektor zum Anschluss der mindestens einen Medienquelle wird in vorteilhafter Weise die Möglichkeit geschaffen, eine Medienquelle an den modularen Rahmen anzuschließen. Der modulare Rahmen und damit das Funktionsmodul kann somit in vorteilhafter Weise mit mindestens einem Medium über die Medienverteileinrichtung versorgt werden.

Vorzugsweise ist mindestens ein Konnektor über eine Schnellspanneinrichtung an dem Rahmenkörper angeordnet. Die Schnellspanneinrichtung befestigt dabei den Konnektor einerseits an dem Rahmenkörper und richtet den Konnektor andererseits in eine bevorzugte Richtung, beispielsweise in Richtung des anzubindenden Funktionsmoduls, aus. Beispielsweise kann der Konnektor durch die Schnellspanneinrichtungen derartig ausgerichtet werden, dass ein vertikal strömendes Medium durch den Konnektor nach oben in Richtung Funktionsmodul strömt. Durch die Ausrichtung des Konnektors kann das Medium somit vorteilhaft und direkt, d.h. ohne Umwege durch Knicke, Schlaufen oder Kurven, in der Leitungseinrichtung in Richtung des Funktionsmoduls strömen. Ferner ist der mindestens eine Konnektor durch die Schnellspanneinrichtung besonders leicht für einen Benutzer zugänglich und ermöglicht gleichzeitig das Verbinden mit beispielsweise weiteren Funktionselementen auf besonders einfache Art und Weise.

Ist der zweite Konnektor über die Schnellspanneinrichtung an dem Rahmenkörper angeordnet, so wird über die Schnellspanneinrichtung ebenfalls ein besonders einfacher Funktionsmodulwechsel ermöglicht, da der Benutzer weder Werkzeug noch aufwändige Umbauten vornehmen muss, um ein über den Konnektor angeschlossenes Funktionsmodul von der Medienverteileinrichtung zu entkoppeln und ein alternatives Funktionsmodul über den Konnektor wieder mit der Medienverteileinrichtung zu verbinden. Durch die Schnellspanneinrichtung wird somit sowohl der Funktionsmodulwechsel als auch der Funktionsmoduleinbau und Funktionsmodulausbau besonders einfach und aufwandfrei ermöglicht. Durch die Schnellspanneinrichtung ist das Funktionsmodul an dem Rahmenkörper festlegbar bzw. auch trennbar ausgestaltet.

In einer bevorzugten Ausführungsform ist vorgesehen, dass die Medienverteileinrichtung T-förmig ausgestaltet ist, wobei der erste Konnektor über die Leitungseinrichtung über den zweiten Konnektor mit dem Funktionsmodul medienleitend verbindbar ist, wobei der dritte Konnektor über die Leitungseinrichtung mit einer weiteren Medienverteileinrichtung und/oder einem weiteren Funktionsmodul verbindbar ist, und wobei der erste Konnektor mit dem dritten Konnektor und der dritte Konnektor mit dem zweiten Konnektor über die Leitungseinrichtung medienführend verbunden ist. Die T-förmige Ausgestaltung der Medienverteileinrichtung ermöglicht einen Fluss des Mediums vom ersten Konnektor über die Leitungseinrichtung über den zweiten Konnektor zum Funktionsmodul und vom Funktionsmodul bzw. vom zweiten Konnektor über die Leitungseinrichtung zum dritten Konnektor und bevorzugt vom ersten Konnektor zum dritten Konnektor. Über die Leitungseinrichtung und den dritten Konnektor fließt das Medium dann zu der weiteren Medienverteileinrichtung und/oder dem weiteren Funktionsmodul. Durch die T-förmig ausgestaltete Medienverteileinrichtung wird somit eine serielle oder parallele Aneinanderreihung von Funktionsmodulen und/oder weiteren Medienverteileinrichtungen ermöglicht. Durch die T-förmige Ausgestaltung kann das Medium ferner in vorteilhafter Weise nahezu horizontal von dem ersten Seitenteil zu dem zweiten Seitenteil strömen. Über den dritten Konnektor kann aber auch eine weitere Medienquelle an die Medienverteileinrichtung angebunden werden.

Durch die T-förmig ausgestaltete Medienverteileinrichtung wird eine Art Baukastenprinzip für den modularen Rahmen geschaffen, wodurch die T-förmige Medienverteileinrichtung modular mit weiteren modularen Rahmen bzw. weiteren Funktionsmodulen oder weiteren Medienverteileinrichtungen erweiterbar ist.

Der modulare Rahmen kann über die T-förmige Medienverteileinrichtung somit besonders vorteilhaft beliebig erweitert werden. Dabei wird durch die Ausgestaltung der Medienverteileinrichtung sichergestellt, dass jeder Rahmen und jedes in einem Rahmen aufgenommene Funktionsmodul mit mindestens einem Medium versorgt werden kann.

Vorzugsweise ist vorgesehen, dass die erste Aufnahmeeinrichtung zur Anordnung des mindestens einen Funktionsmoduls zumindest teilweise im Bereich des Rahmeninnenraums zwischen der Vorderseite und der Rückseite sowie zwischen dem ersten und dem zweiten Seitenteil ausgestaltet ist. Die erste Aufnahmeeinrichtung kann dabei beispielsweise nach innen in Richtung des Rahmeninnenraums gerichtet sein. Durch eine derartige Ausgestaltung der ersten Aufnahmeeinrichtung kann das angeordnete mindestens eine Funktionsmodul die erste Aufnahmeeinrichtung für einen draufschauenden Benutzer verdecken, so dass für den Benutzer des modularen Rahmens lediglich das Funktionsmodul sichtbar ist. Eine derartige Ausgestaltung des modularen Rahmens mit der ersten Aufnahmeeinrichtung bietet dem Benutzer somit eine ästhetisch besonders ansprechende Form.

Vorzugsweise ist vorgesehen, dass eine horizontale Mittelachse durch den Rahmeninnenraum verläuft und parallel zu dem ersten und zweiten Seitenteil sowie zu dem Vorderseitenteil und Rückseitenteil angeordnet ist, wobei der Rahmen von der Mittelachse ausgehend spiegelsymmetrisch ausgestaltet ist. Durch die horizontale Mittelachse wird der Rahmeninnenraum in zwei gleich große Bereiche aufgeteilt. Durch die spiegelsymmetrische Ausgestaltung des Rahmens relativ zu der horizontalen Mittelachse können bei der Konstruktion des Rahmens die gleichen Teile an unterschiedlicher Stelle verwendet werden. Zudem kann die Spiegelsymmetrie des Rahmens beispielsweise auch auf ein an den Rahmen angeordneten Unterschrank angewendet werden. In diesem Fall können bei dem Unterschrank Seitenteile mit gleicher Geometrie an mehreren Positionen verwendet werden. Durch die spiegelsymmetrische Ausgestaltung des Rahmens wird somit in vorteilhafter Weise die Komplexität des modularen Rahmens und von einem an dem modularen Rahmen angeordneten Unterschank verringert.

Vorzugsweise umfasst die Medienverteileinrichtung zumindest eine Verbindungseinrichtung zur Übertragung von Daten und/oder elektrischer Energie. Die Verbindungseinrichtung kann dabei beispielsweise als eine USB-Schnittstelle ausgestaltet sein und über die Medienverteileinrichtung an dem Rahmenkörper des modularen Rahmens angeordnet sein. Beispielsweise kann eine USB-Schnittstelle somit an dem Vorderseitenteil des Rahmenkörpers angelegt sein. Durch die Verbindungseinrichtung an der Medienverteileinrichtung wird somit in vorteilhafter Weise die Möglichkeit geschaffen, externe Geräte, wie beispielsweise ein Smartphone, mit elektrischer Energie zu versorgen oder Datentransfers zwischen verschiedenen Geräten zu ermöglichen.

In einer bevorzugten Ausführungsform ist vorgesehen, dass der Rahmenkörper zur Aufnahme einer elektrischen Energiequelle zur Anbindung an die Medienverteileinrichtung ausgebildet ist zur elektrischen Energiezufuhr zu mindestens einem in dem Rahmen aufgenommenen Funktionsmodul. Die Energiequelle kann dabei als eine mobile Energiequelle ausgestaltet sein, insbesondere in Form einer Powerbank oder eines Akkumulators mit ggf. einem Spannungswandler, insbesondere einem Inverter. Somit kann der Akkumulator beispielsweise ein als ein Drehspieß ausgestaltetes Funktionsmodul mit Strom versorgen und den Drehspieß antreiben. Gleichzeitig könnte der Akkumulator externe Geräte wie ein Smartphone oder einen Ventiltor betreiben. Durch die Aufnahme der elektrischen Energiequelle kann somit in vorteilhafter Weise ein Funktionsmodul autark betrieben werden, wobei zusätzlich oder alternativ externe Geräte mit elektrischer Energie versorgt werden können.

Gemäß einem weiteren Aspekt betrifft die Erfindung ein System für eine Outdoor-Küche mit mindestens einem modularen Rahmen und mit mindestens einem Funktionsmodul und/oder mindestens einem Schrankmodul. Dabei ist das Funktionsmodul bevorzugt werkzeuglos an dem modularen Rahmen einsetzbar und ebenso werkzeuglos von diesem trennbar. Ebenso kann das Schrankmodul werkzeuglos mit dem modularen Rahmen verbindbar ausgestaltet werden. Die Verbindung von Funktionsmodul und/oder Schrankmodul mit dem modularen Rahmen kann beispielsweise durch eine Steckverbindung erfolgen. Zur Stabilisierung einzelner Bereiche können zusätzliche Schraubverbindungen oder Verriegelungseinrichtungen vorgesehen sein. Das Funktionsmodul und/oder das mindestens eine Schrankmodul lassen sich somit auf besonders einfache Art und Weise an dem modularen Rahmen anordnen und mit diesem lasttragend verbinden.

In einer bevorzugten Ausführungsform ist vorgesehen, dass das Funktionsmodul als ein Keramikbrennermodul, ein Kochmodul, ein Pizza-Ofen, ein Wok-Brenner, ein Plancha-Grill und/oder als ein Adapter zur Aufnahme eines Edelstahlbehälters ausgestaltet ist. An dem Keramikbrennermodul kann zudem ein Drehspieß sowie optional ein Hinterbrenner angeordnet sein. Entsprechend den Bedürfnissen des Benutzers kann auf besonders einfache Art und Weise das gewünschte Funktionsmodul verwendet und bei Bedarf durch ein anderes Funktionsmodul ausgetauscht werden. Beispielsweise hat bei dem derartigen System der Benutzer zunächst die Möglichkeit, das als ein Pizza-Ofen ausgestaltete Funktionsmodul zu verwenden und den Pizza-Ofen anschließend durch das als ein Wok-Brenner ausgestaltete Funktionsmodul auszutauschen. Dabei benötigt der Benutzer lediglich den Platz für ein Funktionsmodul in der Outdoor-Küche, kann jedoch zwischen einer Vielzahl von unterschiedlichen Funktionsmodulen wählen. Besteht der Bedarf, mehrere Funktionsmodule zu verwenden, kann der Benutzer den modularen Rahmen zum Anschluss eines Funktionsmoduls beliebig erweitern und somit nahezu beliebig viele Funktionsmodule miteinander verbinden und kombinieren. Selbstverständlich kann dabei jedes Funktionsmodul beispielsweise auch ein Schrankmodul aufweisen. Besonders bevorzugt können die nicht in dem Rahmen aufgenommenen Funktionsmodule in dem Schrankmodul gelagert werden. Hierzu kann in dem Schrank wiederum mindestens eine Aufnahmeeinrichtung ausgebildet werden, woran das Funktionsmodul lagerbar und/oder festlegbar ist.

Durch den erfindungsgemäßen modularen Rahmen ist der Austausch der einzelnen Funktionsmodule für den Benutzer somit besonders einfach. Durch die konstruktiven Gegebenheiten benötigt das System vorteilhaft wenig Platz und der Benutzer kann ferner bei der Zusammenstellung der gewünschten Funktionsmodule flexibel aus einer Vielzahl von Funktionsmodulen wählen.

Vorzugsweise ist vorgesehen, dass an dem Funktionsmodul ein Deckel zur teilweisen oder vollständigen Abdeckung des Funktionsmoduls schwenkbar angeordnet ist. Dabei kann der Deckel schwenkbar im Bereich des Rückseitenteils angeordnet sein. Der Deckel kann dabei mit einem Isoliermaterial wie beispielsweise Steinwolle gefüllt sein, um die Umgebung des Deckels vor einer erhöhten Temperatur, die unterhalb des Deckels entstehen kann, zu isolieren.

Der Deckel kann zudem linear geführt und schwenkbar ausgestaltet sein, so dass der Deckel zunächst nach oben geschwenkt wird und das Funktionsmodul somit freiliegt. Anschließend kann der Deckel über eine Linearführung hinter dem Rückseitenteil in Richtung Boden geführt werden. Durch die Anordnung eines schwenkbaren Deckels kann das Funktionsmodul auf besonders einfache Art und Weise abgedeckt werden, beispielsweise zum Schutz vor Witterung oder um einen geschlossenen Raum unterhalb des Deckels und oberhalb des Funktionsmoduls bereitzustellen. Ferner kann durch die Linearführung der Deckel auf besonders ästhetische Art und Weise außerhalb des Sicht- und Arbeitsfelds des Benutzers geführt werden.

In einer bevorzugten Ausführungsform ist vorgesehen, dass an dem modularen Rahmen mindestens ein weiterer modularer Rahmen und/oder ein weiteres Funktionsmodul angeordnet ist, wobei die Medienverteileinrichtung des modularen Rahmens mit einer Medienverteileinrichtung des weiteren modularen Rahmens verbindbar ist. Durch eine derartige Ausgestaltung des Systems kann ein modularer Rahmen beliebig mit einem weiteren modularen Rahmen und/oder weiteren Funktionsmodulen erweitert werden. Beispielsweise kann der Benutzer somit über die modularen Rahmen ein Pizza-Ofen-Funktionsmodul mit einem Keramikbrenner-Funktionsmodul und einem Edelstahlbehälter-Funktionsmodul kombinieren, ohne aufwändige Umbauten vornehmen zu müssen. Dabei sind die Medienverteileinrichtungen der jeweiligen modularen Rahmen miteinander verbindbar, so dass die jeweiligen Medien beliebig weit leitbar sind und lediglich eine Medienquelle für sämtliche modularen Rahmen und sämtliche Funktionsmodule verwendet wird. Somit kann das System auf besonders einfache Art und Weise erweitert oder Funktionsmodule ausgetauscht werden.

Vorzugsweise ist vorgesehen, dass an der Medienverteileinrichtung mindestens eine Medienquelle und/oder eine Mediensenke angeordnet ist. Als Medienquelle kann beispielsweise eine Gasquelle oder eine Frischwasserquelle verwendet werden. Als Mediensenke kann in diesem Zusammenhang ein Behälter verwendet werden, der beispielsweise das benutzte Wasser aufsammelt. Alternativ kann auch eine abführende Leitung im Sinne einer Mediensenke an die mindestens eine Medienverteileinrichtung angebunden werden. Die Medienabfuhr erfolgt damit ebenfalls über die Medienverteileinrichtung.

Durch die Anbindung mindestens einer Medienquelle und/oder mindestens einer Mediensenke an die Medienverteileinrichtung wird somit in vorteilhafter Weise die Versorgung und/oder Entsorgung der in den Rahmen aufgenommenen Funktionsmodulen gewährleistet.

Im Folgenden werden beispielhafte Ausführungsformen des erfindungsgemäßen modularen Rahmens und des erfindungsgemäßen Systems unter Bezugnahme auf die Figuren näher erläutert.

Es zeigen:
- Fig. 1: eine schematische Darstellung einer beispielhaften Ausführungsform eines erfindungsgemäßen modularen Rahmens für eine Outdoor-Küche,
- Fig. 2: eine schematische Darstellung einer beispielhaften Ausführungsform einer Medienverteileinrichtung,
- Fig. 3: eine schematische Darstellung einer beispielhaften Ausführungsform eines erfindungsgemäßen Systems für eine Outdoor-Küche mit einem modularen Rahmen.

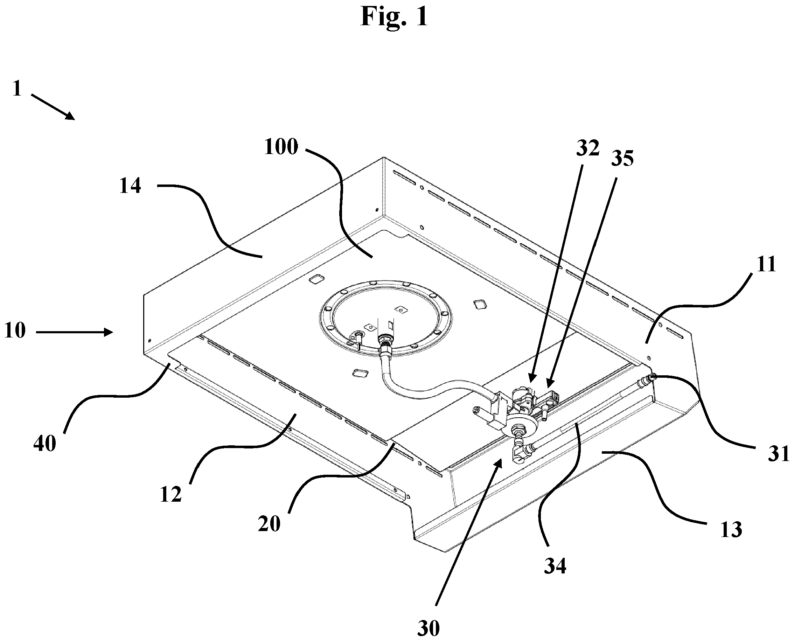

Die Fig. 1 zeigt eine schematische Darstellung einer beispielhaften Ausführungsform eines erfindungsgemäßen modularen Rahmens 1 für eine Outdoor-Küche zur austauschbaren Aufnahme mindestens eines Funktionsmoduls, wobei die Unteransicht des modularen Rahmens 1 dargestellt ist.

Fig. 1 zeigt einen modularen Rahmen 1 mit einem Rahmenkörper 10 mit einem ersten Seitenteil 11 und einem dem ersten Seitenteil 11 gegenüberliegenden zweiten Seitenteil 12, einem Vorderseitenteil 13 und einem dem Vorderseitenteil 13 gegenüberliegenden Rückseitenteil 14 zur Umgrenzung eines Rahmeninnenraums. An der Vorderseite 13 des Rahmenkörpers 10 ist eine Medienverteileinrichtung 30 angeordnet, über die ein Medium, beispielsweise ein Brenngas, in verschiedene Bereiche des modularen Rahmens 1 geleitet wird.

In einem oberen Bereich des modularen Rahmens 1 ist eine erste Aufnahmeeinrichtung 20 angeordnet, über die ein als Kochmodul ausgestaltetes Funktionsmodul 100 an dem Rahmenkörper angeordnet und gelagert ist. Erfindungsgemäß sind die Funktionsmodule 100 nicht auf das dargestellte Kochmodul beschränkt, sondern es können vielmehr unterschiedliche Module, wie unter anderem ein Keramikbrennermodul, ein Waschbeckenmodul, ein Meatermodul etc. vorgesehen werden. Die erste Aufnahmeeinrichtung 20 ist dabei als ein in der Fig. 1 verdeckter Vorsprung im oberen Bereich des Rahmenkörpers 10 ausgestaltet, so dass das Funktionsmodul konstruktiv einfach und zugleich stabil in dem Rahmenkörper 10 angeordnet werden kann. Durch den einfachen und modularen Aufbau des modularen Rahmens 1 wird somit eine besonders einfache Halterung des Funktionsmoduls 100 sichergestellt, wobei gleichzeitig ein Austausch des Funktionsmoduls 100 ermöglicht wird, welcher bevorzugt werkzeuglos und mühelos durch den Benutzer durchführbar ist.

Das Funktionsmodul 100 kann über eine Medienverteileinrichtung 30 mit einem Medium versorgt werden, welches durch die Medienverteileinrichtung 30 strömt. Die dargestellte Ausführungsform der Medienverteileinrichtung 30 ist L-förmig ausgestaltet und weist einen ersten Konnektor 31 auf, der über eine Leitungseinrichtung 34 an dem ersten Seitenteil angeordnet ist. Über den seitlich angeordneten ersten Konnektor 31 kann die Medienverteileinrichtung 30 beispielsweise mit einer weiteren Medienverteileinrichtung 30 eines weiteren modularen Rahmens 1 oder einer Medienquelle verbunden werden. Ferner weist die Medienverteileinrichtung 30 einen zweiten Konnektor 32 auf, der mit dem Funktionsmodul 100 verbunden ist. Durch den zweiten Konnektor 32 ist das Funktionsmodul 100 somit über die Leitungseinrichtung 34 mit dem ersten Konnektor 31 verbunden. Das Funktionsmodul 100 kann eine Medienregeleinrichtung 35 umfassen zur Regelung eines Medienstroms. Die Medienregeleinrichtung 35 kann zwischen dem ersten und dem zweiten Konnektor 31, 32 angeordnet und zur Regelung des Medienstroms in der Leitungseinrichtung 30 ausgebildet sein. In der dargestellten Ausführungsform ist die Medienregeleinrichtung 35 als ein Drosselventil ausgestaltet, wodurch der Fluss des Medienstroms bis auf 0 reguliert werden kann und wobei auch das Ein- und Ausschalten des als Kochmodul ausgestalteten Funktionsmoduls 100 durch die Medienverteileinrichtung 30 über die Medienregeleinrichtung 35 möglich ist. Durch die Anbindung des Funktionsmoduls 100 über den zweiten Konnektor 32 kann dieses ferner besonders einfach ausgetauscht werden.

In einem unteren Randbereich des Rahmenkörpers 10 ist eine zweite Aufnahmeeinrichtung 40 ausgebildet, über die mindestens ein Schrankmodul mit dem Rahmenkörper 10 verbindbar ist. In der beispielhaften dargestellten Ausführungsform ist die zweite Aufnahmeeinrichtung 40 als ein an dem Rahmenkörper 10 angeordneter Vorsprung ausgestaltet. Über die zweite Aufnahmeeinrichtung 40 kann der modulare Rahmen 1 somit auf einfache Weise um mindestens ein Schrankmodul ergänzt werden.

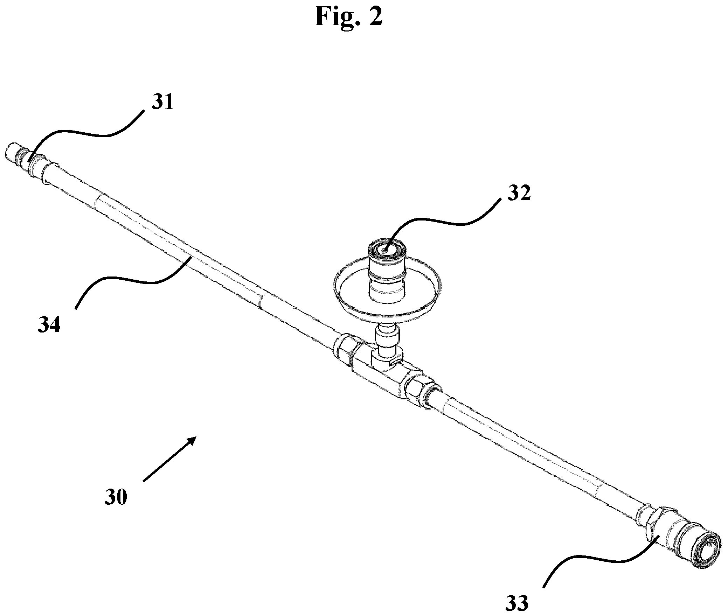

Fig. 2 zeigt eine schematische Darstellung einer beispielhaften Ausführungsform einer Medienverteileinrichtung 30, die T-förmig ausgestaltet ist und die einen ersten Konnektor 31, einen zweiten Konnektor 32 und einen dritten Konnektor 33 aufweist. Der dritte Konnektor kann beispielsweise in einem Bereich des zweiten Seitenteils 12 angeordnet sein. Die drei Konnektoren 31, 32, 33 sind dabei über die Leitungseinrichtung 34 miteinander verbunden und jeweils dazu ausgebildet, mit einem angepassten Konnektor oder einer Anschlusseinrichtung verbunden zu werden. Beispielsweise ist der erste Konnektor 31 als ein einzuführender männlicher Konnektor ausgestaltet, so dass dieser beispielsweise mit einem aufnehmenden weiblichen Konnektor gekoppelt werden kann. Durch die Kopplung eines aufzunehmenden Konnektors mit einem einzuführenden Konnektor kann besonders vorteilhaft eine mediendichte Verbindung erzeugt werden.

Ferner können der zweite und dritte Konnektor 32, 33, wie beispielhaft dargestellt, jeweils als ein aufnehmender weiblicher Konnektor ausgestaltet werden, so dass diese jeweils mit einem einzuführenden männlichen Konnektor, wie dem ersten Konnektor 31, verbunden werden können. Dabei sind der zweite und der dritte Konnektor 32, 33 jeweils als eine federbelastete Schnellkupplung ausgestaltet, so dass eine Verbindung und Trennung jeweils beider Konnektorenteile werkzeuglos erfolgen kann.

In der dargestellten Ausführungsform der Medienverteileinrichtung 30 kann der erste Konnektor 31 beispielsweise mit einer Medienquelle verbunden werden. Eine derartige Medienquelle kann beispielsweise eine Gasquelle sein, so dass das Gas von der Gasquelle durch den ersten Konnektor 31 in Richtung des zweiten Konnektors 32 und weiter in Richtung des dritten Konnektors 33 strömen bzw. verteilt werden kann.

Über den zweiten Konnektor 32 kann beispielsweise das als Kochmodul ausgestaltete Funktionsmodul 100 mit der Medienverteileinrichtung 30 verbunden und mit Gas versorgt werden. Über den dritten Konnektor 33 kann beispielsweise eine weitere Medienverteileinrichtung 30 eines weiteren modularen Rahmens 1 mit Gas versorgt werden. Der erfindungsgemäße modulare Rahmen 1 lässt sich somit auf besonders einfache Art und Weise mit weiteren modularen Rahmen verbinden. Ferner kann über die Medienverteileinrichtung 30 ein Funktionsmodul 100 bevorzugt werkzeuglos und besonders einfach ausgetauscht werden, so dass der Benutzer somit je nach Anwendungsfall aus einer Vielzahl von Funktionsmodulen 100 wählen und diese verwenden kann, ohne dabei verhältnismässig viel Platz in Anspruch nehmen zu müssen. Über die Medienverteileinrichtung 30 können erfindungsgemäß nicht nur gasförmige Medien verteilt werden, sondern vielmehr jegliche Medien, welche während des Betriebs eines Funktionsmoduls 100 zu- oder abgeführt werden sollen, wie beispielsweise Frischwasser und Grauwasser, elektrische Energie, etc.

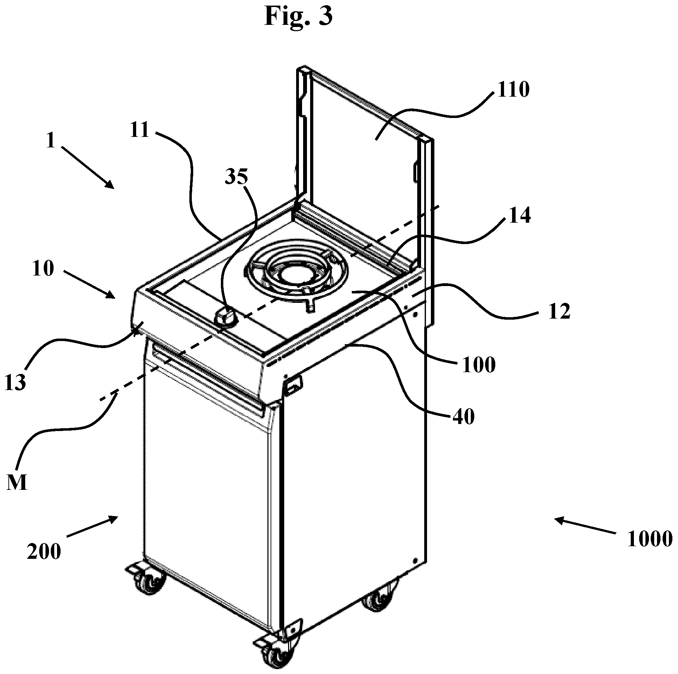

Die Fig. 3 zeigt eine schematische Darstellung einer beispielhaften Ausführungsform eines erfindungsgemäßen Systems 1000 für eine Outdoor-Küche mit einem modularen Rahmen 1. In der dargestellten Ausführungsform ist in einem oberen Bereich des Rahmenkörpers 10 ein als Kochmodul ausgestaltetes Funktionsmodul 100 angeordnet. Das System 1000 weist ferner einen Deckel 110 zur vollständigen Abdeckung des Funktionsmoduls 100 auf, wobei der Deckel 110 schwenkbar in einem Bereich des Rückseitenteils 14 des Rahmenkörpers 1 angeordnet ist. Durch die Anordnung eines schwenkbaren Deckels 110 kann das Funktionsmodul 100 auf besonders einfache Art und Weise abgedeckt werden, beispielsweise zum Schutz vor Witterung oder um einen geschlossenen Raum unterhalb des Deckels 110 und oberhalb des Funktionsmoduls 100 bereitzustellen. In der dargestellten beispielhaften Ausführungsform kann der Deckel 110 zusätzlich zum Verschwenken relativ zu dem Rahmenkörper 10 linear verschieblich ausgestaltet werden, so dass, wie dargestellt, der Deckel 110 in der aufgeklappten Stellung gegenüber dem Rahmenkörper 10 nach unten verschoben werden kann.

Unterhalb des modularen Rahmens 1 ist ein Schrankmodul 200 angeordnet, das über die zweite Aufnahmeeinrichtung 40 mit dem Rahmenkörper 10 verbunden ist. Das Schrankmodul 200 kann beispielsweise zur Lagerung einer Medienquelle, beispielsweise einer Gasflasche, oder zur Lagerung weiterer Funktionsmodule verwendet werden. In der dargestellten Ausführungsform verfügt das Schrankmodul 200 über Seitenwände und über eine im vorderen Bereich angeordnete Tür, so dass das erfindungsgemäße System 1000 besonders stabil und kompakt ausgestaltet ist. Unterhalb des Schrankmoduls 200 angeordnete Rollen ermöglichen zudem ein für einen Benutzer besonders einfaches Rangieren des erfindungsgemäßen Systems 1000.

In der dargestellten Ausführungsform des erfindungsgemäßen Systems 1000 verfügt der modulare Rahmen 1 über eine Medienregeleinrichtung 35, welche in einem Bereich des Vorderseitenteils 13 angeordnet ist. Über die Medienregeleinrichtung 35 kann beispielsweise der Gasstrom eines Gases geregelt werden, das über eine in dem Schrankmodul 200 gelagerte Gasflasche bereitgestellt wird. Das Gas wird dabei über eine nicht dargestellte Medienverteileinrichtung an das als Kochmodul ausgestaltete Funktionsmodul 100 geleitet. Selbstverständlich können neben der Medienregeleinrichtung 35 noch weitere Elemente, wie beispielsweise eine Temperaturanzeige, in dem Bereich des Vorderseitenteils 13 angeordnet werden.

Der modulare Rahmen 1 des dargestellten Systems weist ferner eine horizontale Mittelachse M auf, die durch den Rahmeninnenraum des Rahmenkörpers 10 verläuft und parallel zu dem ersten 11 und zweiten Seitenteil 12 sowie zu dem Vorderseitenteil 13 und Rückseitenteil 14 angeordnet ist, wobei der Rahmen 1 von der Mittelachse M ausgehend spiegelsymmetrisch ausgestaltet ist. Die Spiegelsymmetrie des Rahmens 1 ist zudem auf das Schrankmodul 200 angewendet. Somit werden bei dem Schrankmodul 200 Seitenteile mit gleicher Geometrie an mehreren Positionen verwendet. Durch die spiegelsymmetrische Ausgestaltung des Rahmens 1 wird in vorteilhafter Weise die Komplexität des modularen Rahmens 1 und von dem an dem modularen Rahmen 1 angeordneten Schrankmodul 200 verringert.

Das erfindungsgemäße System 1000 ist somit besonders kompakt und platzsparend ausgestaltet und bietet gleichzeitig dem Benutzer entsprechend seinen Bedürfnissen die Möglichkeit, auf besonders einfache Art und Weise das gewünschte Funktionsmodul 100 zu verwenden und dieses bei Bedarf durch ein anderes Funktionsmodul 100 auszutauschen.

### Bezugszeichenliste

- 1: Modularer Rahmen
- 10: Rahmenkörper
- 11: erstes Seitenteil
- 12: zweiten Seitenteil
- 13: Vorderseitenteil
- 14: Rückseitenteil
- 20: erste Aufnahmeeinrichtung
- 30: Medienverteileinrichtung
- 31: erster Konnektor
- 32: zweiter Konnektor
- 33: dritter Konnektor
- 34: Leitungseinrichtung
- 35: Medienregeleinrichtung
- 40: zweite Aufnahmeeinrichtung
- 100: Funktionsmodul
- 110: Deckel
- 200: Schrankmodul
- 1000: System
- M: Mittelachse

## Patentansprüche

1. Modularer Rahmen (1) für eine Outdoor-Küche zur austauschbaren Aufnahme mindestens eines Funktionsmoduls (100) umfassend:
- einen Rahmenkörper (10) mit einem ersten Seitenteil (11) und einem dem ersten Seitenteil (11) gegenüberliegenden zweiten Seitenteil (12), einem Vorderseitenteil (13) und einem dem Vorderseitenteil (13) gegenüberliegenden Rückseitenteil (14) zur Umgrenzung eines Rahmeninnenraums,
- einer ersten Aufnahmeeinrichtung (20) und
- mindestens einer Medienverteileinrichtung (30);
wobei die mindestens eine Medienverteileinrichtung mindestens zwei Konnektoren (31, 32) und eine Leitungseinrichtung (34) umfasst;
wobei die Leitungseinrichtung (34) zur Verteilung mindestens eines Mediums zwischen den mindestens zwei Konnektoren (31, 32) ausgebildet ist;
wobei ein erster der Konnektoren (31) in einem Bereich des ersten Seitenteils (11) angeordnet ist und ein zweiter der Konnektoren (32) zur Anbindung an das mindestens eine Funktionsmodul ausgebildet ist; und
wobei über die erste Aufnahmeeinrichtung (20) das mindestens eine Funktionsmodul mit dem Rahmenkörper (10) verbindbar und/oder an dem Rahmenkörper (10) lagerbar ist.

2. Modularer Rahmen nach Anspruch 1, **dadurch gekennzeichnet, dass** die Leitungseinrichtung (34) der Medienverteileinrichtung (30) an der Vorderseite (13) des Rahmenkörpers (10) angeordnet ist.

3. Modularer Rahmen nach Anspruch 1 oder 2, **dadurch gekennzeichnet, dass** die Konnektoren (31, 32) jeweils dazu ausgebildet sind, mit einem angepassten Konnektor oder einer Anschlusseinrichtung verbunden zu werden.

4. Modularer Rahmen nach einem der Ansprüche 1 bis 3, **dadurch gekennzeichnet, dass** die Medienverteileinrichtung (30) eine Medienregeleinrichtung (35) zur Regelung mindestens einen Medienstroms in der Leitungseinrichtung (30) zwischen dem ersten Konnektor (31) und dem zweiten Konnektor (32) umfasst.

5. Modularer Rahmen nach einem der vorherigen Ansprüche, **dadurch gekennzeichnet, dass** der Rahmenkörper (10) eine zweite Aufnahmeeinrichtung (40) umfasst, über die mindestens ein Schrankmodul (200) mit dem Rahmenkörper (10) verbindbar ist.

6. Modularer Rahmen nach einem der vorherigen Ansprüche, **dadurch gekennzeichnet, dass** der Rahmenkörper (10) an dem ersten Seitenteil (11), dem zweiten Seitenteil (12), der Vorderseite (13) und/oder der Rückseite (14) einen Anschlag aufweist zur Bildung der ersten und/oder zweiten Aufnahmeeinrichtung, über welche das entsprechende Funktionsmodul (100) und/oder Schrankmodul (200) an dem Rahmenkörper (10) arretierbar ist.

7. Modularer Rahmen nach einem der vorigen Ansprüche, **dadurch gekennzeichnet, dass** die Medienverteileinrichtung (30) L-förmig ausgestaltet ist, wobei der erste Konnektor (31) über die Leitungseinrichtung (34) und über den zweiten Konnektor (32) mit dem Funktionsmodul (100) verbindbar ist.

8. Modularer Rahmen nach einem der vorigen Ansprüche, **dadurch gekennzeichnet, dass** die Medienverteileinrichtung (30) in einem Bereich des zweiten Seitenteils (12) mindestens einen dritten Konnektor (33) aufweist.

9. Modularer Rahmen nach einem der vorherigen Ansprüche, **dadurch gekennzeichnet, dass** die Medienverteileinrichtung (30) einen vierten Konnektor zum Anschluss mindestens einer Medienquelle aufweist.

10. Modularer Rahmen nach einem der vorherigen Ansprüche, **dadurch gekennzeichnet, dass** mindestens ein Konnektor über eine Schnellspanneinrichtung an dem Rahmenkörper (10) angeordnet ist.

11. Modularer Rahmen nach einem der vorherigen Ansprüche, **dadurch gekennzeichnet, dass** die Medienverteileinrichtung (30) T-förmig ausgestaltet ist, wobei der erste Konnektor (31) über die Leitungseinrichtung (34) über den zweiten Konnektor (32) mit dem Funktionsmodul (100) verbindbar ist, wobei der dritte Konnektor (33) über die Leitungseinrichtung (34) mit einer weiteren Medienverteileinrichtung und/oder einem weiteren Funktionsmodul verbindbar ist, und wobei der erste Konnektor (31) mit dem dritten Konnektor (33) und der dritte Konnektor (33) mit dem zweiten Konnektor (32) über die Leitungseinrichtung (34) verbunden ist.

12. Modularer Rahmen nach einem der vorherigen Ansprüche, **dadurch gekennzeichnet, dass** die erste Aufnahmeeinrichtung (20) zur Anordnung des mindestens einen Funktionsmoduls (100) zumindest teilweise im Bereich des Rahmenrinnenraums zwischen der Vorderseite (13) und der Rückseite (14) sowie zwischen dem ersten (11) und dem zweiten Seitenteil (12) ausgestaltet ist.

13. Modularer Rahmen nach einem der vorherigen Ansprüche, **dadurch gekennzeichnet, dass** eine horizontale Mittelachse (M) durch den Rahmeninnenraum verläuft und parallel zu dem ersten (11) und zweiten Seitenteil (12) sowie zu dem Vorderseitenteil (13) und Rückseitenteil (14) angeordnet ist, wobei der Rahmen von der Mittelachse (M) ausgehend spiegelsymmetrisch ausgestaltet ist.

14. Modularer Rahmen nach einem der vorigen Ansprüche, **dadurch gekennzeichnet, dass** die Medienverteileinrichtung (30) zumindest eine Verbindungseinrichtung zur Übertragung von Daten und/oder elektrischer Energie umfasst.

15. Modularer Rahmen nach einem der vorherigen Ansprüche, **dadurch gekennzeichnet, dass** der Rahmenkörper (10) zur Aufnahme einer elektrischen Energiequelle zur Anbindung an die Medienverteileinrichtung (30) ausgebildet ist zur elektrischen Energiezufuhr zu mindestens einem in dem Rahmen aufgenommenen Funktionsmodul (100).

16. System (1000) für eine Outdoor-Küche mit mindestens einem modularen Rahmen (1) nach einem der vorherigen Ansprüche und mindestens einem Funktionsmodul (100) und/oder mindestens einem Schrankmodul (200).

17. System nach Anspruch 16, **dadurch gekennzeichnet, dass** das Funktionsmodul (100) als ein Keramikbrennermodul, ein Kochmodul, ein Pizzaofen, ein Wok-Brenner, ein Planchagrill und/oder als ein Adapter zur Aufnahme eines Edelstahlbehälters ausgestaltet ist.

18. System nach Anspruch 16 oder 17, **dadurch gekennzeichnet, dass** an dem Funktionsmodul (100) ein Deckel (110) zur teilweisen oder vollständigen Abdeckung des Funktionsmoduls (100) schwenkbar angeordnet ist.

19. System nach einem der Ansprüche 16 bis 18, **dadurch gekennzeichnet, dass** an dem modularen Rahmen (1) mindestens ein weiterer modularer Rahmen und/oder ein weiteres Funktionsmodul angeordnet ist, wobei die Medienverteileinrichtung (30) des modularen Rahmens (1) mit einer Medienverteileinrichtung des weiteren modularen Rahmens verbindbar ist.

20. System nach einem der Ansprüche 16 bis 19, **dadurch gekennzeichnet, dass** an der Medienverteileinrichtung (30) mindestens eine Medienquelle und/oder eine Mediensenke angeordnet ist.
